# EUROPÄISCHE PATENTANMELDUNG

(11) **EP 4 516 702 A1**
(43) Veröffentlichungstag der Anmeldung: **05.03.2025**
(21) Anmeldenummer: 24197544.0
(22) Anmeldetag: 30.08.2024
(51) Int. Cl.: B65G 29/00, B65G 47/84

(54) **STERNRADFÖRDERER ZUM FÖRDERN VON BEHÄLTERN IN EINER GETRÄNKEABFÜLLANLAGE**

(30) Priorität: 30.08.2023 DE 102023123402
(71) Anmelder: KRONES AG, 93073 Neutraubling (DE)
(72) Erfinder: Stoeckl, Fabian, 93073 Neutraubling (DE); Landler, Bruno, 93073 Neutraubling (DE); Schönfelder, Markus, 93073 Neutraubling (DE); Ehrismann, Tobias, 93073 Neutraubling (DE)
(74) Vertreter: Nordmeyer, Philipp Werner

(57) **Zusammenfassung**

Die vorliegende Erfindung betrifft einen Sternradförderer (1) zum Fördern von Behältern (78), bevorzugt zum Fördern von Behältern (78) in einer Getränkeabfüllanlage, umfassend ein um eine zentrale Drehachse (4) drehbares Fördersegment (2) und zumindest ein Paar von in Bezug auf die Drehachse (4) nach außen gerichteten Taschenarmen (8) zur Ausbildung einer Tasche (6) zum zumindest teilweisen Aufnehmen eines zu fördernden Behälters (78), wobei jeder Taschenarm (8) am Umfang des Fördersegments (2) angeordnet und um eine im Wesentlichen parallel zur Drehachse (4) orientiere Schwenkachse (24) schwenkbar ist, wobei die Taschenarme (8) mit einem am Fördersegment (2) angeordneten, in Bezug auf die Drehachse (4) radial verschiebbaren Einstellteil (28) derart in Eingriff stehen, dass durch Verschieben des Einstellteils (28) in radialer Richtung (R) ein eine Taschenweite (13) der Tasche (6) einstellbar ist.

## Beschreibung

### Technisches Gebiet

Die vorliegende Erfindung betrifft einen Sternradförderer zum Fördern von Behältern, beispielsweise zum Fördern von Behältern in einer Getränkeabfüllanlage, welcher eine Mehrzahl von während eines Förderbetriebs starren Taschen.

### Stand der Technik

In Getränkeabfüllanlagen werden Sternradförderer üblicherweise auf automatisierten Bearbeitungslinien eingesetzt, beispielsweise am Ende einer Produktionslinie, um befüllte und verschlossene Behälter mit einer vorgegebenen Taktung zu vereinzeln.

Um die Taktung, also die Frequenz der Weitergabe der Behälter bzw. den Abstand zweier aufeinanderfolgender Behälter, vorgeben zu können, umfassen Sternradförderer eine Mehrzahl von an einem Förderrad über den Umfang gleichmäßig verteilt angeordneter Behälteraufnahmen, in welchen die zu fördernden Behälter während des Förderns durch den Sternradförderer aufgenommen sind.

Hierbei sind grundsätzlich zwei grundlegend verschiedene Arten von Sternradförderern hinsichtlich der Beschaffenheit ihrer Behälteraufnahmen zu unterscheiden, nämlich einerseits umfassend Behälteraufnahmen in Form von Klammern und andererseits in Form von Taschen.

Die erste Art von Sternradförderern weisen Behälteraufnahmen auf, welche als aktive oder passive Klammern ausgebildet sind. Diese Klammern greifen den zu fördernden Behälter, indem im Förderbetrieb des Sternradförderers, also während der Förderung zu fördernder Behälter, bei der Übernahme des Behälters und der Übergabe des Behälters zwei zueinander schwenkbare Klammerarme zwischen einer geöffneten Position und einer geschlossenen Position aktiv oder passiv verschwenkt werden. Die geöffnete Position erlaubt ein Einbringen des zu haltenden Behälters in die Klammer und entsprechend ein Herausnehmen des Behälters aus der Klammer. In der geschlossenen Position fixiert die Klammer den Behälter in einer vorgegebenen Position in der Klammer, so dass ein Fördern möglich ist. Der Behälter ist hierbei durch die das Greifen via der Klammer am Sternradförderer in Position gehalten. Der Übergang zwischen geöffneter Position und geschlossener Position der Klammerarme erfolgt entweder aktiv, also angesteuert durch eine entsprechende Steuerungsvorrichtung, oder passiv, indem der Behälter gegen eine Vorspannung der Klammerarme in die Klammer geschoben wird. Entsprechend erfährt eine Klammer während des Förderbetriebs des Sternradförderers bei der Übernahme des zu fördernden Behälters von einer in Förderrichtung des Behälters in der Anlage dem Sternradförderer vorgelagerten Vorrichtung in die Klammer und auch bei der Übergabe des durch den Sternradförderer geförderten Behälter aus der Klammer an eine dem Sternradförderer nachgelagerte Vorrichtung jeweils eine Änderung der Stellung ihrer Klammerarme, bei der Übernahme zumindest von der geöffneten Position in die geschlossene, und bei der Übergabe von der geschlossenen Position in die geöffnete Position. Ein derartiger Förderer, der mit Klammern zum Greifen eines Behälters ausgebildet ist, ist beispielsweise der EP 2 093 169 A1 zu entnehmen.

Dieses Dokument beschäftigt sich mit der zweiten Gruppe bzw. Art von Sternradförderern, welche keine Klammern, sondern Taschen umfassen. "Taschen" sind in diesem Dokument als Behälteraufnahmen zu verstehen, die im Gegensatz zu den zuvor beschriebenen Klammer während des Förderbetriebs des Sternradförderers keine Bewegung zwischen verschiedenen Positionen erfahren. Im Gegenteil sind die Taschen in einem Rüstvorgang voreingestellt und verbleiben im eigentlichen Betrieb des Sternradförderers und der letzteren umfassenden Abfüllanlage in einer starren, fixen Position. Die Taschen stellen also einen während des Förderbetriebs gleichbleibenden Aufnahmeraum bereit, in welchen ein Behälter zum Fördern zumindest teilweise aufgenommen ist, ohne dabei durch Positionsveränderungen von Klammerarmen gegriffen zu werden, wie dies bei Klammern der Fall ist. Während der Förderung von Behältern erfolgt mithin keine Einstellung der Taschenweite.

Um ein Fördern eines Behälters in Förderrichtung zu ermöglichen, umfasst die Tasche einen in Förderrichtung betrachtet rückwärtigen Taschenarm, welcher bei einer Drehung in Förderrichtung des die Tasche umfassenden Förderrades den zu fördernden Behälter in Förderrichtung gesehen von hinten schiebt. Der Behälter wird, etwaige in Zusammenwirken mit einer in Bezug auf die Drehachse des Förderrades radial außenseitig vorgesehene Führung, entweder über eine starre Bodenplatte des Sternradförderers geschoben oder der Sternradförderer umfasst eine mitdrehende Bodenplatte, auf welcher der geförderte Behälter mit seinem Behälterboden steht. Zur in Förderrichtung gesehenen vorderseitigen Beschränkung der Tasche kann die Tasche einen weiteren Taschenarm umfassen.

Verbreitet sind Sternradförderer mit in Wesentlichen scheibenförmigem Förderrad mit einer Vielzahl von am Umfang vorgesehenen Taschen, die gleichmäßig voneinander beabstandet sind. Das Förderrad derartiger Sternradförderer umfasst typischerweise zumindest ein Paar scheibenartiger Platten, die in einem Umrüstmodus um eine zentrale Drehachse des Förderrades relativ zueinander verdrehbar sind. An den Platten sind starre, nach radial außen gerichtet Vorsprünge angeordnet, die jeweils einen Taschenarm einer Tasche ausbilden. Die Vorsprünge der einen Platte bilden hierbei stehts den Taschenarm auf einer Seite jeder Tasche aus, beispielsweise stets den rückwärtigen Taschenarm, und die Vorsprünge der anderen Platte bilden dann stets den Taschenarm auf der anderen Seite jeder Tasche aus, beispielsweise entsprechend stets den vorderseitigen Taschenarm. Durch Verdrehen der Platten zueinander kann eine Taschenweite, also eine auf die Aufnahme des Typs der zu fördernden Behälter, spezifischer auf dessen Behälterbreite bzw. Behälterdurchmesser angepasste Breite der Taschen in einem Ebene senkrecht zur Drehachse im Umrüstmodus voreingestellt werden. Eine derartige Vorrichtung kann der EP 3 152 138 B1 entnommen werden.

Ferner ist aus der WO 2005/030616 A2 eine Vorrichtung bekannt, bei welcher Taschenarme über Zahnradgetriebe schwenkbar an einem Paar von Scheiben eines Förderrades angeordnet sind.

### Darstellung der Erfindung

Ausgehend von dem bekannten Stand der Technik ist es eine Aufgabe der vorliegenden Erfindung, einen verbesserten Sternradförderer zum Fördern von Behältern, bevorzugt zum Fördern von Behältern in einer Getränkeabfüllanlage, bereitzustellen.

Die Aufgabe wird durch einen Sternradförderer zum Fördern von Behältern, bevorzugt zum Fördern von Behältern in einer Getränkeabfüllanlage, mit den Merkmalen des Anspruchs 1 gelöst. Vorteilhafte Weiterbildungen ergeben sich aus den Unteransprüchen, der Beschreibung und den Figuren.

Entsprechend wird ein Sternradförderer zum Fördern von Behältern, bevorzugt zum Fördern von Behältern in einer Getränkeabfüllanlage, vorgeschlagen, umfassend zumindest ein um eine zentrale Drehachse drehbares Fördersegment bzw. Förderradsegment und zumindest ein Paar von in Bezug auf die Drehachse nach außen gerichteten Taschenarmen zur Ausbildung einer Tasche zum zumindest teilweisen Aufnehmen eines zu fördernden Behälters, wobei jeder Taschenarm am Umfang des Fördersegments angeordnet und um eine im Wesentlichen parallel zur Drehachse orientiere Schwenkachse relativ zum Fördersegment schwenkbar ist.

Die Taschenarme stehen mit einem am Fördersegment angeordneten, in Bezug auf die Drehachse radial verschiebbaren Einstellteil derart in Eingriff, dass durch Verschieben des Einstellteils in radialer Richtung eine Taschenweite der Tasche einstellbar ist.

Mit anderen Worten stehen die zwei die Tasche ausbildenden Taschenarme derart mit dem Einstellteil in Eingriff, dass durch Verschieben des Einstellteils eine in einer Ebene senkrecht zur Drehachse liegenden Breite der durch die Taschenarme ausbildenden Tasche, die hier als Taschenweite bezeichnet ist, die auf die Aufnahme eines Typs der zu fördernden Behälter, spezifischer auf dessen Behälterbreite bzw. Behälterdurchmesser angepasst ist, einstellbar ist. Denn die Breite der Tasche ist vor allem durch den Abstand der Taschenarme einer Tasche vorgegeben. Die Taschenweite der Taschenarme entspricht also einem bezogen auf die Drehachse in Umfangsrichtung vorliegenden Abstand der Taschenarme. Nochmals anders ausgedrückt, die Taschenarme stehen mit dem am Fördersegment angeordneten, in Bezug auf die Drehachse radial verschiebbaren Einstellteil derart in Eingriff, dass durch Verschieben des Einstellteils in radialer Richtung ein bezogen auf die Drehachse in Umfangsrichtung vorliegender Abstand der Taschenarme, der die Taschenweite vorgibt, einstellbar ist.

Durch das Verschieben des Einstellteils kann mithin ein Schwenken beider Taschenarme des Paares von Taschenarme zugleich erzielt werden.

Der vorgeschlagene Sternradförderer stellt mithin einen Taschen-Sternradförderer dar, bei welchem im Förderbetrieb die Dimension, insbesondere die Taschenweite, der Tasche fixiert ist und zudem der in der Tasche geförderte Behälter durch bloßes Schieben ohne Klemmkraftwirkung der Taschenarme und ohne Bewegung der Taschenarme im Förderbetrieb gefördert wird, in Abgrenzung zu Förderrädern mit Klammern, bei welchen im Förderbetrieb zur Übernahme und Übergabe eines Behälters ein Greifvorgang und ein Loslassen durch jeweiliges Verschwenken der Klammerarme der Klammer relativ zueinander stattfindet.

Bei Drehung des Fördersegments um eine zentrale Drehachse kann der Behälter in der Tasche im Umfangsrichtung gefördert werden, bevor er an einem definierten Ort bzw. einer vorgegebenen Winkelposition bezüglich der Drehachse wieder freigegeben wird, beispielsweise zu einer Verarbeitungseinheit oder zu einem weiteren Förderer.

Der Behälter kann optional in der Tasche positioniert sein, indem er zwischen zumindest einer Kontaktfläche der Tasche und einer radial außen angeordneten, optionalen Führungsschiene gehalten wird, die zumindest einen Teil des Umfangs des Fördersegments umgeben kann.

Um den Sternradförderer von der Förderung von Behältern erster Abmessungen an die Förderung von Behältern anderer Abmessungen anzupassen, kann optional in einem Umrüstbetrieb das Einstellteil aus seiner gegenwärtigen Lage, in welcher es zumindest während des Förderbetriebs fixiert war, verschoben werden, so dass der Abstand der Taschenarme des Paares auf einen anderen vorgegebenen Wert verändert wird, welcher zu den Behältern anderer Abmessungen korrespondiert. Nach der Einstellung der Taschenarme auf den neuen vorgegebenen Abstand kann das Einstellteil wiederum in seiner Position fixiert werden. Nach der Fixierung des Einstellteils - und damit der Taschenarme - in der neuen festen Position kann erneut in einen Förderbetrieb gewechselt werden. Dadurch kann die Taschenweite auf den jeweils zu transportierenden Behälter, spezifischer an dessen Behälterbreit bzw. Behälterdurchmesser angepasst werden.

Das Fördersegment kann über einen vorgegebenen Erstreckungswinkel bezogen auf die Drehachse ausgebildet sein. Mit anderen Worten kann das Fördersegment sich über ein vorgegebenes Bogenmaß, also einem vorgegebenen Kreissegment erstrecken. Der Erstreckungswinkel kann beispielsweise 45°, 60°, 90°, 120° oder 180° betragen, ohne hierauf eingeschränkt zu sein.

Der Sternradförderer umfasst zumindest ein Fördersegment. In einer Ausführungsform kann sich das Fördersegment über den Vollwinkel von 360° um die Drehachse erstrecken, folglich im Sinne einer Kreisscheibe oder eines Kreisrings, die bzw. der in Umfangsrichtung kontinuierlich ausgebildet sein bzw. sich über den gesamten Umfang erstrecken kann.

Ein über den gesamten Umfang erstreckendes Fördersegment kann als ein Förderrad verstanden werden.

Der Sternradförderer kann auch eine Mehrzahl von sich in Umfangsrichtung aneinander anschließendem Fördersegmenten umfassen, welche zusammen ein optional kontinuierliches Förderrad ausbilden können. Anders ausgedrückt kann der Sternradförderer ein um die Drehachse drehbares Förderrad umfassen, dass segmentiert ausgebildet ist, also aus den Fördersegmenten ausgebildet ist.

Gemäß einer optionalen Ausführungsform können die zwei Taschenarme des die Tasche ausbildenden Paares von Taschenarmen derart mit dem Einstellteil in Eingriff stehen, dass durch ein Verschieben des Einstellteils in radialer Richtung die Taschenarme zueinander gegengleich schwenkbar sind. So kann durch ein radiales Verschieben des Einstellteils die Breite der Tasche auf einfache Weise verändert werden, wobei bei Behältern unterschiedlicher Größe deren Mittelachse bezogen auf die Umfangsrichtung stets im Wesentlichen an gleicher Stelle, und bei entsprechender Ausbildung der Taschenarme, auch radialer Richtung an gleicher Stelle positioniert sein kann. Denn diese Ausführungsform erlaubt ein im Wesentlichen symmetrischen Aufweiten und Verkleinern der Taschenbreite.

Gemäß einer weiteren optionalen Ausführungsform kann der Sternradförderer derart eingerichtet sein, dass die Position der die Tasche ausbildenden Taschenarme des Paares von Taschenarmen in einem Umrüstmodus in eine vorgegebene Position voreinstellbar ist und während eines Förderbetriebs, in welchem zu fördernde Behälter gefördert werden, das Paar von Taschenarmen in der voreingestellten Position fixiert ist.

Die zwei die Tasche ausbildenden Taschenarme des Paares von Taschenarmen können derart mit dem Einstellteil in Eingriff stehen, dass bei einer Verschiebung des Einstellteils in einen ersten Richtungssinn, beispielsweise einen bezogen auf die Drehachse nach radial außen weisenden Richtungssinn, die Taschenarme aufeinander zu geschwenkt werden, und bei einer Verschiebung des Einstellteils in einen dem ersten Richtungssinn entgegen gerichteten zweiten Richtungssinn, entsprechend des genannten Beispiels dann einen bezogen auf die Drehachse nach radial innen weisenden Richtungssinn, die Taschenarme voneinander weg geschwenkt werden.

Optional können die Taschenarme je einen zur Ausbildung der Tasche vorgesehenen Taschenabschnitt umfassen, welche je eine Kontaktfläche für den in der Tasche gehaltenen Behälter ausbilden können. Die Taschenweite entspricht der Breite der Taschen auf Höhe der Kontaktflächen.

Entsprechend können die zwei die Tasche ausbildenden Taschenarme des Paares von Taschenarmen dann etwa derart mit dem Einstellteil in Eingriff stehen, dass bei einer Verschiebung des Einstellteils in den ersten Richtungssinn, etwa nach radial außen, die zur Ausbildung der Tasche vorgesehenen Taschenabschnitte der Taschenarme aufeinander zu geschwenkt werden, und bei einer Verschiebung des Einstellteils in zweiten Richtungssinn, entsprechend etwa nach radial innen, die Taschenabschnitte voneinander weg geschwenkt werden.

Gemäß einer optionalen Ausführungsform können die zwei die Tasche ausbildenden Taschenarme des Paares von Taschenarmen je über ein Interaktionselement mit dem Einstellteil in Eingriff stehen, wobei optional das Interaktionselement in einer Langlochnut im Einstellteil geführt sein kann, beispielsweise in Form eines mit der Langlochnut in Eingriff stehenden Stiftelements. Das Interaktionselement kann parallel zur Schwenkachse des Taschenarmes orientiert sein und/oder sich parallel zur Schwenkachse des Taschenarmes vom Taschenarm erstrecken.

Alternativ oder zusätzlich kann das Interaktionselement einstückig mit dem Taschenarm ausgebildet sein. Das Interaktionselement mag alternativ ein am Taschenarm angebrachtes, separates Teil sein.

Die Langlochnuten im Einstellteil können, beispielsweise bezogen auf bzw. mit ihrer jeweiligen Längserstreckung, je mit einem Winkel zur Bewegungsrichtung des Einstellteils (der radialen Richtung) im Einstellteil orientiert angeordnet sein. Die Langlochnuten können hierbei optional bezogen auf die Bewegungsrichtung und/oder eine zur Drehachse radiale Richtung achssymmetrisch im Einstellteil angeordnet sein.

Die Führungsnut kann zumindest zwischen einem radial innen gelegenen Punkt und einem radial außen gelegenen Punkt eine Trajektorie vorgeben bzw. anders ausgedrückt definieren, die sich bezogen auf die Drehachse schräg nach außen erstreckt.

Die Begriffe "radial innerer Punkt" und "radial äußerer Punkt" sind in diesem Dokument so zu verstehen, dass der radial innere Punkt bezogen auf die Drehachse auf einem kleineren Radius liegt als der radial äußere Punkt. Der radial innere Punkt weist also einen kleineren radialen Abstand zur Drehachse auf als der radial äußere Punkt.

Unter dem Ausdruck "bezogen auf die Drehachse schräg nach außen erstrecken" ist zu verstehen, dass die Trajektorie gegenüber der Umfangsrichtung vom radial inneren Punkt zum radial äußeren Punkt in einem Winkel größer 0° und kleiner 90° verläuft, und die Trajektorie vom radial inneren Punkt zum radial äußeren Punkt in einem Winkel größer 0° und kleiner 90° zur radialen Richtung verläuft. Dies kann dadurch erreicht werden, dass der radial innere Punkt und der radial äußere Punkt bezogen auf die Umfangsrichtung der Drehachse versetzt zueinander angeordnet sind. Mit anderen Worten weisen der radial innere Punkt und der radial äußere Punkt entsprechend unterschiedliche Winkelpositionen bezogen auf die Drehachse auf. Nochmals anders ausgedrückt schließen eine lotrecht zur Drehachse orientierte Gerade, die sich zwischen der Drehachse und dem radial inneren Punkt erstreckt, und eine lotrecht zur Drehachse orientierte Gerade, die sich zwischen der Drehachse und dem radial äußeren Punkt erstreckt, einen Winkel größer 0° ein.

"Bezogen auf die Drehachse schräg nach außen erstrecken" bedeutet in diesem Dokument also, dass eine zwischen dem radial inneren Punkt und dem radial äußeren Punkt erstreckende virtuelle Gerade mit der Umfangsrichtung im radial inneren Punkt, spezifischer mit einer Tangente der Umfangsrichtung der Drehachse im radial inneren Punkt, einen Winkel größer 0° und kleiner 90° einschließt. Gemäß optionaler Ausführungsformen kann der Winkel kleiner gleich als 60°, bevorzugt kleiner gleich 45°, besonders bevorzugt kleiner gleich 30° und ganz besonders bevorzugt kleiner gleich 20°, kleiner gleich 15° oder gar kleiner gleich 10° sein. Je kleiner der Winkel der Schrägstellung gegenüber der Umfangsrichtung, spezifischer der Winkel, den die Trajektorie bzw. die Gerade zwischen dem radial inneren Punkt und den radial äußeren Punkt und die Tangente der Umfangsrichtung in radial inneren Punkt einschließen, desto geringer sind die resultieren Verstellkräfte, die notwendig sind, um das Einstellteil zu bewegen, und entsprechend auch ein Abrieb an den vorliegenden Gleitflächen.

Die Trajektorie kann zumindest teilweise linear ausgebildet sein, mithin geradlinig ausgebildet sein. Die Langlochnut kann mithin zumindest teilweise ein lineares Langloch sein. Die Trajektorie kann ferner zumindest teilweise gekrümmt ausgebildet sein. Die Langlochnut kann mithin zumindest teilweise ein gekrümmtes Langloch sein. Die Krümmung der Trajektorie entlang ihres gekrümmten Verlaufs kann einen konstanten Wert aufweisen oder entlang ihres Verlaufs variieren.

Gemäß einer optionalen Ausführungsform kann das Fördersegment ein relativ zum Einstellteil um die Drehachse drehbares Scheibensegment umfassen, welches derart mit dem Einstellteil in Eingriff steht, dass eine Drehung des Scheibensegments um die Drehachse relativ zum Einstellteil eine Verschiebung des Einstellteils in radialer Richtung erzeugt.

Das Fördersegment kann zumindest ein Scheibensegment umfassen. In einer Ausführungsform kann sich das Scheibensegment über den Vollwinkel von 360° um die Drehachse erstrecken, folglich im Sinne einer Kreisscheibe oder eines Kreisrings, die bzw. der in Umfangsrichtung kontinuierlich ausgebildet sein bzw. sich über den gesamten Umfang erstrecken kann. Ein sich über den gesamten Umfang erstreckendes Scheibensegment kann mithin eine Kreisscheibe bzw. Kreisringscheibe ausbilden.

Der Sternradförderer kann eine Mehrzahl von sich in Umfangsrichtung aneinander anschließenden Scheibensegmenten umfassen, welche zusammen ein optional kontinuierliches Scheibenteil ausbilden. Anders ausgedrückt kann der Sternradförderer ein um die Drehachse drehbares radförmiges Scheibenteil umfassen, dass segmentiert ausgebildet ist, also aus den Scheibensegmenten ausgebildet ist.

Das Scheibensegment kann als Ringsegment ausgebildet sein. Das Scheibensegment kann in Umfangsrichtung über einen vorgegebenen Erstreckungswinkel bezogen auf die Drehachse ausgebildet sein. Mit anderen Worten kann das Scheibensegment sich über ein vorgegebenes Bogenmaß, also einem vorgegebenen Kreissegment erstrecken. Der Erstreckungswinkel kann beispielsweise 45°, 60°, 90°, 120° oder 180° betragen, ohne hierauf eingeschränkt zu sein.

In einer Ausführungsform kann sich das Scheibensegment über den Erstreckungswinkel des Fördersegments erstrecken. Anders ausgedrückt kann der Erstreckungswinkel des Scheibensegments im Wesentlichen dem Erstreckungswinkel des Fördersegments entsprechen. Optional kann die Summe des Erstreckungswinkels des Scheibensegments und des Winkels des Bewegungsvermögens des Scheibensegments in Umfangsrichtung im Wesentlichen dem Erstreckungswinkel des Fördersegments entsprechend, optional minus einem vorgegebenen Betrag.

Die Position und die Bewegung des Einstellteils kann auf besonders einfache und robuste Weise erzielt werden, wenn einer optionalen Ausführungsform entsprechend das Scheibensegment eine Führungsnut umfasst, in welcher ein am Einstellteil vorstehender Führungsabsatz geführt ist. Die Führungsnut kann zumindest zwischen einem radial innen gelegenen Punkt und einem radial außen gelegenen Punkt eine Trajektorie vorgeben, welche sich bezogen auf die Drehachse schräg nach außen erstreckt.

Die Begriffe "radial innerer Punkt" und "radial äußerer Punkt", sowie der Ausdruck "bezogen auf die Drehachse schräg nach außen erstrecken" sind in diesem Dokument konsistent wie oben beschrieben zu verstehen. Gemäß optionaler Ausführungsformen kann der Winkel der Schrägstellung der Führungsnut gegenüber der Umfangsrichtung, spezifischer der Winkel, den die Trajektorie bzw. die Gerade zwischen dem radial inneren Punkt und den radial äußeren Punkt mit der Tangente der Umfangsrichtung in radial inneren Punkt einschließt, kleiner gleich als 60°, bevorzugt kleiner gleich 45°, besonders bevorzugt kleiner gleich 30° und ganz besonders bevorzugt kleiner gleich 20°, kleiner gleich 15° oder gar kleiner gleich 10° sein. Je kleiner der Winkel der Schrägstellung gegenüber der Umfangsrichtung, desto geringer sind die resultieren Verstellkräfte, die notwendig sind, um das Einstellteil und das Scheibensegment relativ zueinander zu bewegen, und entsprechend auch ein Abrieb an deren Gleitflächen, mit welchen sie miteinander in Kontakt stehen.

Die Trajektorie der Führungsnut kann zumindest teilweise linear ausgebildet sein, mithin geradlinig ausgebildet sein. Die Trajektorie kann ferner zumindest teilweise gekrümmt ausgebildet sein. Die Krümmung der Trajektorie entlang ihres gekrümmten Verlaufs kann einen konstanten Wert aufweisen oder entlang ihres Verlaufs variieren.

Optional kann zwischen dem Paar aus Taschenarmen ein radial nach außen orientierter Stempel angeordnet sein, der konfiguriert ist, zusammen mit dem Paar aus Taschenarmen die Tasche auszubilden. Der Stempel mag insbesondere eine Tiefe der Tasche in radialer Richtung bezogen auf die Drehachse vorgeben. Der Stempel kann einen weiteren Kontaktpunkt bzw. Kontaktbereich für den durch die Tasche geförderten Behälter bereitstellen. Folglich können bei Ausbildung der Tasche durch die Taschenarme und den Stempel für den geförderten Behälter zumindest drei Kontaktflächen bereitgestellt werden, über welche der durch die Tasche gefördert werdende Behälter mit der Tasche in Kontakt steht.

Der Stempel ist bezogen auf die Drehachse nach radial außen weisend orientiert am Fördersegment angeordnet. Erstellt mithin einen radialen Anschlag nach radial innen bezogen auf die Drehachse für einen in der Tasche positionierten Behälter dar. Anders ausgedrückt begrenzt der radiale Stempel die Tiefe der Tasche in Richtung der Drehachse.

Der radiale Stempel kann am Einstellteil angeordnet sein, wobei er optional einstückig mit dem Einstellteil ausgebildet ist. Alternativ kann der Stempel auch als separates Teil am Einstellteil angebunden sein.

Gemäß einer optionalen Ausführungsform kann der radiale Stempel relativ zum Fördersegment, zum Einstellteil und/oder zum Paar von Taschenarmen in radialer Richtung zur Drehachse verschiebbar sein. Beispielsweise kann der Stempel derart mit einem relativ zum Stempel um die Drehachse drehbaren Scheibensegment in Eingriff stehen, dass eine Drehung des Scheibensegments um die Drehachse relativ zum Stempel eine Verschiebung des Stempels in radialer Richtung erzeugt. Um einen besonders einfachen Aufbau des Sternradförderers zu erzielen, können der Stempel und das Einstellteil mit demselben Scheibensegment in Eingriff stehen.

Um die Position des radialen Stempels zu steuern, kann das mit dem Stempel in Eingriff stehende Scheibensegment eine Stempelführungsnut umfassen, in welcher ein am Stempel vorstehender Stempelführungsabsatz geführt ist. Die Stempelführungsnut mag hierbei zumindest zwischen einem radial innen gelegenen Punkt und einem radial außen gelegenen Punkt eine Trajektorie vorgeben, welche sich bezogen auf die Drehachse schräg nach außen erstreckt.

Um einen Reinigungsaufwand des vorgeschlagenen Sternradförderers zu verringern, kann das Fördersegment eine Dichtung umfassen, die in radialer Richtung eine Abdichtung zwischen einem radial außerhalb der Dichtung vorliegenden, taschenformenden Bereich der Taschenarme und/oder des Stempels und einem radial innerhalb der Dichtung vorliegenden Fördersegmentinneren bereitstellt.

Es hat sich als vorteilhaft herausgestellt, wenn gemäß einer optionalen Ausführung im Fördersegmentinneren das Einstellteil, die Interaktionselemente, das zumindest eine Scheibensegment, der Führungsabsatz, der Stempelführungsabsatz, die Führungsnut und/oder die Stempelführungsnut angeordnet sind.

Die Dichtung kann optional eine in Umfangsrichtung des Fördersegments umlaufende Dichtung sein. Die Dichtung mag sich optional bezogen auf die Drehachse über den gesamten Umfang erstrecken.

Alternativ oder zusätzlich kann die Dichtung eine Membrandichtung und/oder Balgdichtung sein. Hierbei kann die Dichtung zumindest einen Balgbereich und/oder einen Faltenbalgbereich umfassen.

Das Fördersegmentinnere kann einen Mechanikbereich darstellen, also einen Bereich, in dem die zur Bewegung der Taschenarme und gegebenenfalls des Stempels erforderlichen Bauteile zur Realisierung der Beweglichkeit miteinander in Eingriff stehen, angeordnet sind. Durch die Dichtung kann eine Abdichtung dieses Raumes erzielt werden, so dass sich der Sternradförderer beispielsweise gut für aseptische Abfüllanlagen eignet.

Das Scheibensegment kann eine Betätigungseinheit zum Einstellen der Position des Scheibensegments relativ zum Einstellteil umfassen. Beispielsweise kann das Scheibensegment einen gezahnten Abschnitt umfassen, optional an einer radial inneren Seite des Scheibensegments, etwa wenn das Scheibensegment ringsegmentförmig ausgebildet ist. Dieser gezahnte Abschnitt kann mit einem Ritzel der Betätigungseinheit in Eingriff stehen. Die Betätigungseinheit mag manuell bedienbar sein. Alternativ oder zusätzlich kann die Betätigungseinheit auch einen Antrieb, beispielsweise einen Elektromotor, umfassen. Die Betätigungseinheit kann mit einer Steuerung des Sternradförderers verbunden sein. Ferner kann sie mit einer zentralen Steuerung der den Sternradförderer umfassenden Anlage verbindbar sein. So kann an einer Mensch-Maschinen-Schnittstelle, welche außerhalb eines Förderraumes, beispielsweise eines Reinraumes, in welchem die Behälter durch die Taschen gefördert werden, eine Eingabe erfolgen, welche eine Anpassung der Taschengröße bedingt. Ein hierzu erforderlicher Umrüstprozess des Sternradförderers kann folglich besonders kurz und ohne Verletzung der Atmosphäre des Förderraumes erfolgen.

Alternativ oder zusätzlich kann die Betätigungseinheit selbsthemmend ausgebildet sein. Beispielsweise kann die Betätigungseinheit ein aktiv oder passiv selbsthemmendes Element umfassen. Die Betätigungseinheit kann beispielsweise eine selbsthemmend ausgebildete Schnecke umfassen.

Die Betätigungseinheit kann ferner einen aktiv angesteuerten Bolzen-Klemmmechanismus umfassen.

Der Sternradförderer kann ferner eine radiale Außenführung aufweisen, die radial außerhalb des Fördersegments gegenüber der Tasche ein Abstützen und Führen des in der Tasche geführten Behälters bereitstellt. Die Führung kann eine im Wesentlichen bogenförmige Führungsschiene umfassen, die sich optional im Wesentlichen auf einem vorgegebenen Radius zur Drehachse in Umfangsrichtung erstreckt.

Der Sternradförderer kann ferner eine starre Bodenplatte umfassen, über welche ein durch die Tasche geförderter Behälter geschoben werden kann. Alternativ kann der Sternradförderer eine mitdrehende Bodenplatte umfassen, auf welcher der geförderte Behälter während des Förderns mit seinem Behälterboden steht.

### Kurze Beschreibung der Figuren

Bevorzugte weitere Ausführungsformen der Erfindung werden durch die nachfolgende Beschreibung der Figuren näher erläutert. Dabei zeigen:
- Figur 1: schematisch ein Fördersegment eines Sternradförderers zum Fördern von Behältern in einer Getränkeabfüllanlage;
- Figur 2: schematisch eine perspektivische Seitenansicht eines Details des Sternradförderers aus Figur 1;
- Figur 3: schematisch eine Schnittansicht durch ein Fördersegment des Sternradförderers aus Figur 1;
- Figur 4: schematisch eine perspektivische Schnittansicht eines Sternradförderers zum Fördern von Behältern in einer Getränkeabfüllanlage gemäß einer weiteren Ausführungsform;
- Figur 5: schematisch eine Draufsicht auf den Sternradförderer aus Figur 4, wobei Taschen des Sternradförderers eine minimale Taschengröße aufweisen;
- Figur 6: schematisch eine Draufsicht auf den Sternradförderer aus Figur 4, wobei Taschen des Sternradförderers eine maximale Taschengröße aufweisen;
- Figur 7: schematisch eine perspektivische Schnittansicht eines Sternradförderers zum Fördern von Behältern in einer Getränkeabfüllanlage gemäß einer weiteren Ausführungsform;
- Figur 8: schematisch eine Draufsicht auf ein Detail eines Fördersegments des Sternradförderers aus Figur 7;
- Figur 9: schematisch eine perspektivische Seitenansicht des in Figur 8 gezeigten Details;
- Figur 10: eine schematische Draufsicht des Detailbereichs aus Figur 9;
- Figur 11: schematisch perspektivische Seitenansicht des Detailbereichs der Figuren 9 und 10;
- Figur 12: schematisch eine perspektivische Seitenansicht eines Sternradförderers zum Fördern von Behältern in einer Getränkeabfüllanlage gemäß einer weiteren Ausführungsform;
- Figur 13: schematisch eine perspektivische Seitenansicht des Sternradförderers aus Figur 12 von unten;
- Figur 14: schematisch eine Schnittansicht durch eine Tascheneinheit des Sternradförderers der Figuren 12 und 13;
- Figur 15: schematisch eine Draufsicht auf die in Figur 14 beschriebene Tascheneinheit; und
- Figur 16: schematisch eine perspektivische Seitenansicht in das Innere der Tascheneinheit der Figuren 14 und 15.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen versehen, und auf eine wiederholte Beschreibung dieser Elemente wird teilweise verzichtet, um Redundanzen zu vermeiden.

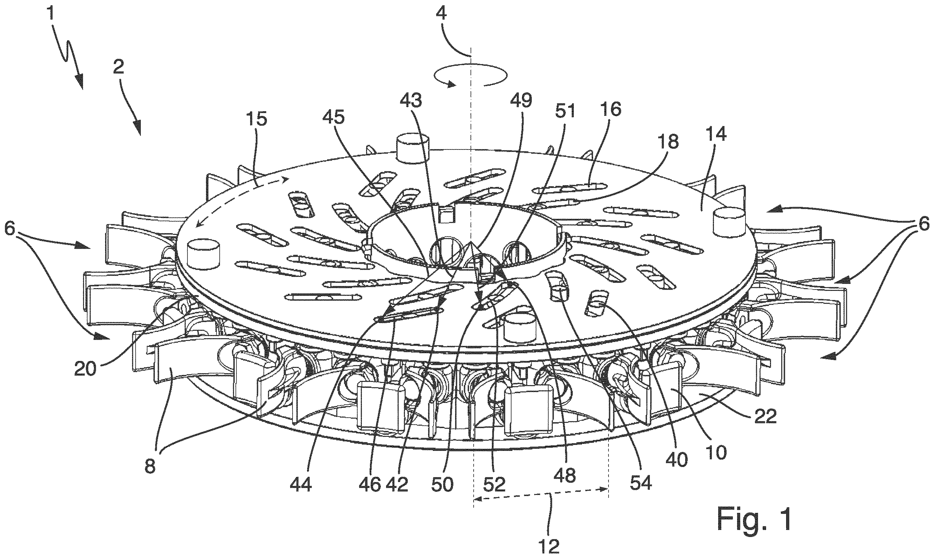

In Figur 1 ist schematisch ein Fördersegment 2 eines Sternradförderers 1 zum Fördern von Behältern in einer Getränkeabfüllanlage gezeigt.

Das Fördersegment 2 ist um eine zentrale Drehachse 4 drehbar und erstreckt sich bezogen auf die Drehachse 4 vollumfänglich. Das Fördersegment 2 stellt mithin ein Förderrad dar.

Am Fördersegment 2 ist eine Mehrzahl von nach radial außen gerichteten Taschen 5 angeordnet, welche je zum teilweisen Aufnehmen eines zu fördernden Behälters (nicht gezeigt) ausgebildet sind. Jede Tasche 6 ist ausgebildet aus einem Paar von in Bezug auf die Drehachse 4 nach außen gerichteten Taschenarmen 8 und einem mittig zwischen dem Paar aus Taschenarmen 8 angeordneten, bezogen auf die Drehachse 4 radial verschiebbaren, optionalen radialen Stempel 10.

Die Taschenarme 8 definieren durch ihren Abstand 12 die Breite der Tasche 6 in Umfangsrichtung, also die senkrecht zur Drehachse 4 vorliegende Taschenweite 13 der Tasche 6. Die Tiefe der Tasche 6 in radialer Richtung ist insbesondere durch die Stellung des Stempels 10 vorgegeben, kann auch durch die Form der Taschenarme 8 vorgegeben sein.

Durch die Taschenarme 8 und den Stempel 10 umfasst die Tasche 6 mithin drei Kontaktflächen, mit welchen die Tasche 6 mit dem Behälter während des Förderns des Behälters in Kontakt tritt. Die Taschenweite 13 erstreckt sich zwischen den Kontaktflächen der Taschenarme 8.

Optional kann radial außerhalb des Fördersegments 2 eine hier nicht gezeigte, nach radial innen gerichtete, optional bogenförmige Außenführung zum Führen des Behälters gegenüber der Taschen 6 angeordnet sein. Der Behälter wird dann entsprechend zwischen Tasche 6 und Außenführung geführt gefördert.

Das Fördersegment 2 umfasst ferner ein relativ zu den übrigen Komponenten des Fördersegments 2 um die Drehachse 4 drehbares Scheibensegment 14. Das Verschiebevermögen des Scheibensegments 14 ist mittels des Bewegungspfeils 15 angedeutet.

Das Scheibensegment 14 erstreckt sich bezogen auf die Drehachse 4 vollumfänglich, es stellt mithin eine Kreisringscheibe dar.

Die Taschenarme 8 sind gemäß dieser Aufführungsform zwischen einem oberen Plattensegment 20 in Form einer Ringscheibe und einem unteren Plattensegment 22 in Form einer Ringscheibe schwenkbar gegenüber diesen angeordnet. Das Scheibensegment 14 ist hier optional über dem oberen Plattensegment 20 verschiebbar zu diesem angeordnet. Die Plattensegmente 20, 22 können als Grundkörper des Fördersegments 2 verstanden werden.

Im Scheibensegment 14 sind eine Mehrzahl von Nuten 16, 18 vorgesehen, welche in einem Umrüstmodus des Sternradförderers eine Verstellung der Position der Taschenarme 8 und des Stempels 10 ermöglichen, wobei sie zur Positionsänderung der Taschenarme 8 und des Stempels 10 mit den Taschenarmen 8 und dem Stempel 8 gekoppelt sind, wie weiter unten näher beschrieben.

Hierbei ist jeder Tasche 6 je eine Langloch-förmige Führungsnut 16 zugeordnet, die zur Positionsvorgabe der Taschenarme 8 bereitgestellt ist, und je eine Langloch-förmige Stempelführungsnut 18 zugeordnet, die zur Positionsvorgabe des Stempels 10 bereitgestellt ist.

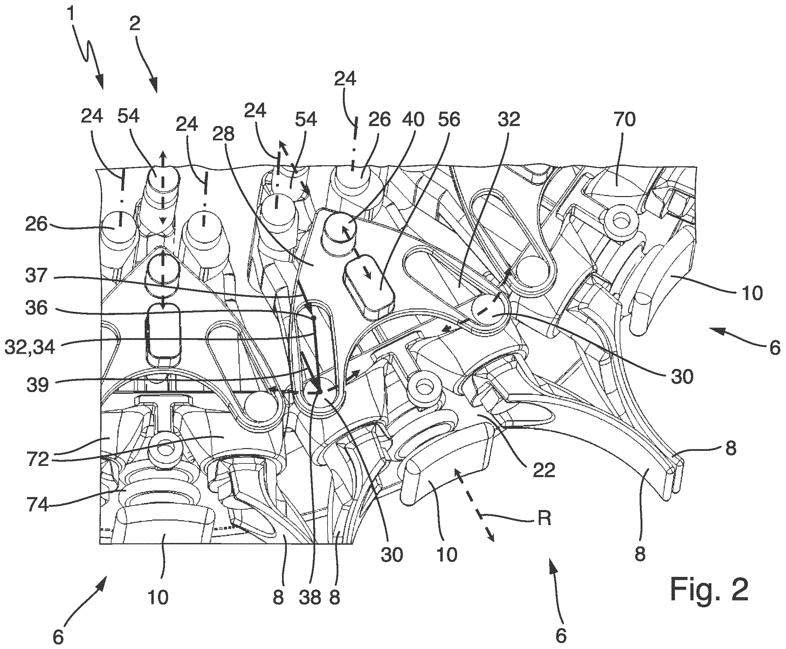

In Figur 2 ist schematisch eine perspektivische Seitenansicht eines Details des Sternradförderers 1 aus Figur 1 zu entnehmen. In dieser Ansicht sind das Scheibensegment 14 und das sich unterhalb des Scheibensegments 14 befindliche obere Plattensegment 20 ausgeblendet.

Entsprechend ist erkennbar, dass jeder Taschenarm 8 der Taschen 6 am Umfang des Fördersegments 2 je um eine im Wesentlichen parallel zur Drehachse 4 orientiere Schwenkachse 24 schwenkbar ist. Hierzu umfasst jeder Taschenarm 8 einen unteren und einen oberen Drehlagerabschnitt 26, mittels welchen er in entsprechende Drehlagerabschnitten im oberen und unteren Plattensegment 20, 22 drehgelagert in Eingriff ist.

Die Taschenarme 8 jedes der Paare von Taschenarmen 8 stehen je mit einem am Fördersegment 2 angeordneten, in Bezug auf die Drehachse 4 radial verschiebbaren Einstellteil 28 derart in Eingriff, dass durch Verschieben des Einstellteils 28 in radialer Richtung R der bezogen auf die Drehachse 4 in Umfangsrichtung vorliegende Abstand 12 der Taschenarme 8 und mithin die Breite bzw. die Taschenweite 13 der Tasche 6 einstellbar ist.

Gemäß der hier gezeigten optionalen Ausführungsform stehen die zwei die Tasche 6 ausbildenden Taschenarme 8 des Paares von Taschenarmen 8 je über ein Interaktionselement 30 mit dem Einstellteil 28 in Eingriff, wobei hier die Interaktionselemente 30 als sich parallel zur Schwenkachse 24 erstreckende Stiftelemente ausgebildet sind und je in einer im Einstellteil 28 vorgesehenen Langlochnut 32 in Eingriff stehend geführt sind. Vorliegend ist das Interaktionselement 30 einstückig am Taschenarm 8 ausgebildet.

Die Langlochnuten 32 im Einstellteil 28 sind mit ihrer jeweiligen Längserstreckung je mit einem Winkel zur Bewegungsrichtung des Einstellteils 28, also zur radialen Richtung R, orientiert im Einstellteil 28 angeordnet. Sie erstrecken sich entsprechend schräg nach außen. Die Langlochnuten 32 sind bezogen auf die radiale Richtung R achssymmetrisch im Einstellteil 28 angeordnet.

Die Längserstreckung der Langlochnuten 32 stellt jeweils eine Trajektorie 34 für das darin geführte Interaktionselement 30 bereit. Anders ausgedrückt sind die Längserstreckung und die Trajektorie dasselbe. Jede Langlochnut 32 erstreckt sich zwischen einem radial innen gelegenen Punkt 36 und einem radial außen gelegenen Punkt 38 und gibt dadurch die Trajektorie 34 vor, die sich bezogen auf die Drehachse 4 in einer Ebene senkrecht zur Drehachse 4 schräg nach außen erstreckt.

Der radial innere Punkt 36 weist bezogen auf die Drehachse 4 einen Radius 37 auf, der kleiner ist als der Radius 39, welchen der radial äußere Punkt 36 aufweist. Der radial innere Punkt 36 weist also einen kleineren radialen Abstand zur Drehachse 4 auf als der radial äußere Punkt 38. Zudem sind der radial innere Punkt 36 und der radial äußere Punkt 38 bezogen auf die Umfangsrichtung der Drehachse 4 versetzt zueinander angeordnet. Die Trajektorie 34 erstreckt sich mithin bezogen auf die Drehachse 4 schräg nach außen. Sie hat also eine Komponente in Umfangsrichtung und eine Komponente in radialer Richtung R.

Die Trajektorie 34 der Langlochnuten 32 ist in dieser Ausführungsform linear ausgebildet. Langlochnut 38 ist mithin ein lineares Langloch.

Die zwei die Tasche 6 ausbildenden Taschenarme 8 des Paares von Taschenarmen 8 stehen hier derart mit dem Einstellteil 28 in Eingriff, dass bei einer Verschiebung des Einstellteils 28 nach radial außen die Taschenarme 8 aufeinander zu geschwenkt werden, und bei einer Verschiebung des Einstellteils 28 nach radial innen die Taschenarme 8 voneinander weg geschwenkt werden.

Das Einstellteil 28 umfasst ferner einen in Richtung der Drehachse 4 und Richtung der Schwenkachsen 24, mithin senkrecht zur die Bewegungsrichtung des Einstellteils 28 darstellenden radialen Richtung R, vorstehenden Führungsabsatz 40, der in der Führungsnut 16 im Scheibensegment 14 geführt ist (siehe Figur 1).

Der radiale Stempel 10 ist relativ zum Einstellteil 28 und zum Paar von Taschenarmen 8 in radialer Richtung R verschiebbar. Er steht über einen sich in Richtung der Drehachse 4 erstreckenden Stempelführungsabsatz 54 in Eingriff mit der Stempelführungsnut 18 des Scheibenelements 14 (siehe Figur 1).

Wie in Figur 1 eingezeichnet, erstreckt sich die Führungsnut 16 zwischen einem radial innen gelegenen Punkt 42, welcher auf einem ersten Radius 43 gelegen ist zu einem radial außen gelegenen Punkt 44, der auf einem zweiten Radius 45 größer dem ersten Radius 43 gelegen ist. Ferner sind der erste Punkt 42 und der zweite Punkt 44 in Umfangsrichtung zueinander versetzt. Entsprechend weist die Führungsnut 16 eine Trajektorie 46 auf, die sich bezogen auf die Drehachse 4 in einer Ebene senkrecht zur Drehachse 4 schräg nach außen erstreckt.

Analog erstreckt sich die Stempelführungsnut 18 zwischen einem radial innen gelegenen Punkt 48, welcher auf einem ersten Radius 49 gelegen ist zu einem radial außen gelegenen Punkt 50, der auf einem zweiten Radius 51 größer dem ersten Radius 49 gelegen ist. Ferner sind der erste Punkt 48 und der zweite Punkt 50 in Umfangsrichtung zueinander versetzt. Entsprechend weist die Stempelführungsnut 18 eine Trajektorie 52 auf, die sich bezogen auf die Drehachse 4 in einer Ebene senkrecht zur Drehachse 4 schräg nach außen erstreckt.

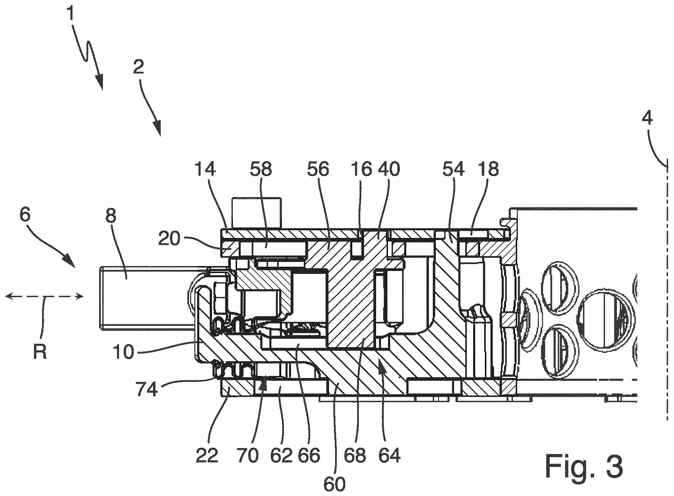

Wie aus Figur 2 zu entnehmen, umfasst das Einstellteil 28 einen radial orientierten Führungsabschnitt 56, der in einer radial orientierten Langlochführung 58 im oberen Plattensegment 20 in radialer Richtung R geführt ist (siehe Figur 3).

Figur 3 zeigt schematisch eine Schnittansicht durch das Fördersegment 2 aus Figur 1 in einer durch die radiale Richtung R und die Drehachse 4 definierten Ebene mittig durch eine Tasche 6. Zu erkennen ist unter anderem nochmals die radiale Führung des Einstellteils 28 gegenüber dem oberen Plattensegment 20 via dem hier passfederartig ausgeführten Führungsabschnitt 56 und der Langlochführung 58.

Zudem ist zu erkennen, dass der radiale Stempel 10 gegenüber dem unteren Plattensegment 22 in radialer Richtung R geführt ist, gemäß dieser Ausführungsform, indem der radiale Stempel 10 über einen radial orientierten, passfederartigen Führungsabschnitt 60 mit einer radial orientierten Langlochführung 62 in Eingriff steht.

Zudem weisen der Stempel 10 und das Einstellteil 28 eine gegenseitige Radialführung 64 auf, vorliegend ausgebildet durch einen passfederartigen Führungsabsatz 68 am Einstellteil 28, der in einer Langlochführung 66 im Stempel 10 geführt ist.

Durch die passfederartige Form ist eine Verdrehsicherung der durch die passfederartigen Komponenten geführten Bauteile bereitgestellt.

Wie den Figuren 1 bis 3 zu entnehmen, umfasst das Fördersegment 2 eine Dichtung 70, die in radialer Richtung R eine Abdichtung zwischen einem radial außerhalb der Dichtung 70 vorliegenden, taschenformenden Bereich der Taschenarme 8 und des Stempels 10, mithin der Taschen 6, und einem radial innerhalb der Dichtung 70 vorliegenden Fördersegmentinneren bereitstellt.

Vorliegend sind im Fördersegmentinneren das Einstellteil 28, die Interaktionselemente 30, das Scheibensegment 14, der Führungsabsatz 40, der Stempelführungsabsatz 54, die Führungsnut 16 und die Stempelführungsnut 18 angeordnet.

Die Dichtung 70 ist in Umfangsrichtung des Fördersegments 2 umlaufend ausgebildet. Sie ist als Membrandichtung mit Balgabschnitten 72 und Faltenbalgabschnitten 74 ausgebildet. Die Faltenbalgabschnitte 74 erlauben die radiale Beweglichkeit der Stempels 10 innerhalb seines durch das Scheibensegment 14 vorgegebenen Bewegungsumfangs. Die Balgabschnitte 72 erlauben das Schwenken der Taschenarme 8 innerhalb des durch das Scheibensegment 14 vorgegebenen Bewegungsumfangs.

Die Dichtung 70 unterteilt mithin das Fördersegment in radialer Richtung R umlaufend in einen fördersegmentäußeren Bereich, in welchem die Taschen 6 angeordnet sind, und das Fördersegmentinnere, in welchem die zur Bewegung der Taschenarme 8 und des Stempels 10 erforderlichen mechanischen Komponenten, also jene Bauteile, die zur Realisierung der Beweglichkeit von Taschenarmen 8 und Stempel 10 miteinander in Eingriff stehen, angeordnet sind.

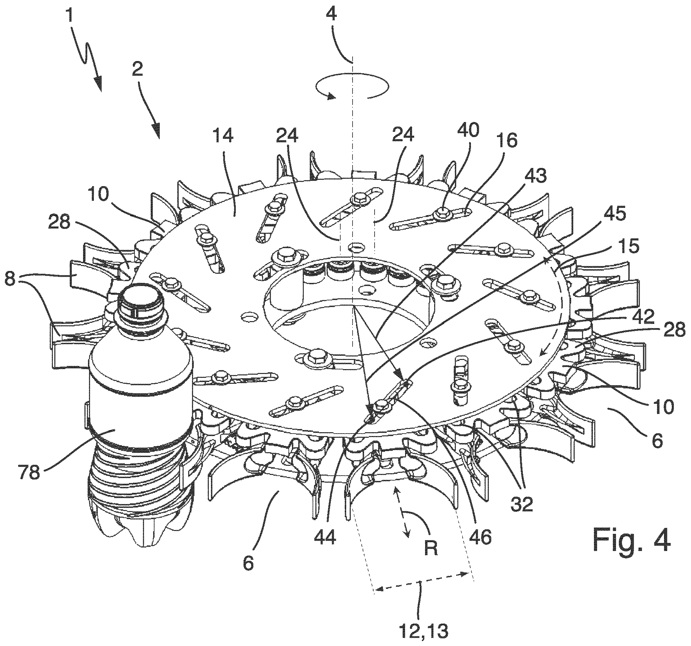

Figur 4 zeigt schematisch eine perspektivische Schnittansicht eines Sternradförderers 1 zum Fördern von Behältern 78 in einer Getränkeabfüllanlage gemäß einer weiteren optionalen Ausführungsform. Der Sternradförderer 1 entspricht im Wesentlichen jenem aus den Figuren 1 bis 3, wobei hier der radiale Stempel 10 einstückig mit dem Einstellteil 28 ausgebildet ist. Entsprechend umfasst das Scheibensegment 14 der Ausführungsform aus Figur 4 keine Stempelführungsnut 18. Beispielhaft ist ein geförderter Behälter 78 gezeigt.

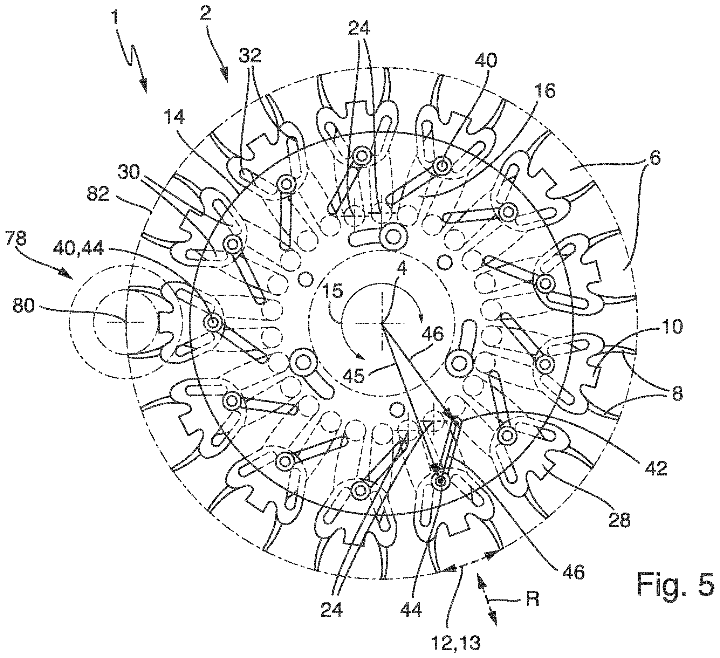

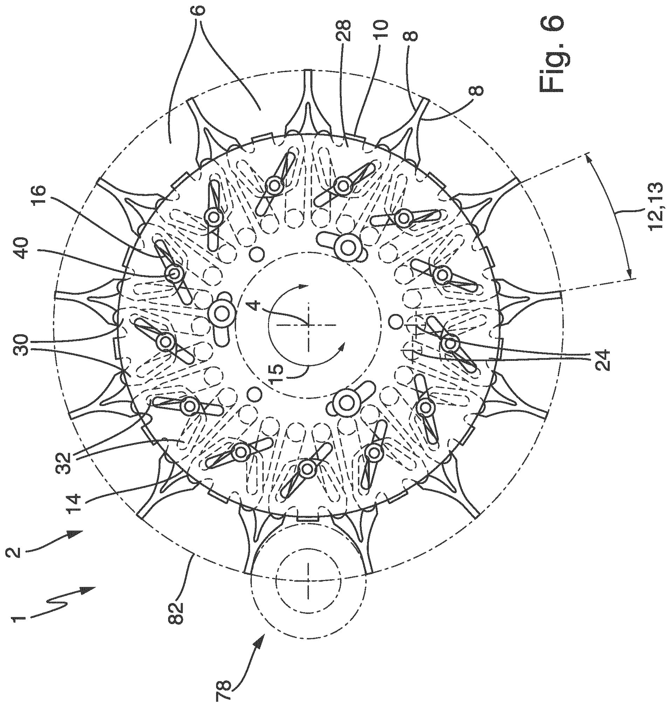

Die Figuren 5 und 6 zeigen jeweils schematisch eine Draufsicht auf den Sternradförderer 1 aus Figur 4, wobei die Taschen 6 in Figur 5 eine minimale Taschengröße aufweisen, und in Figur 6 die Taschen eine maximal einstellbare Taschengröße aufweisen.

In der in Figur 5 gezeigten Einstellung der Taschen 6 sind diese zur Aufnahme eines Behälters 78 mit geringstem vorgesehenem Durchmesser eingestellt, wie in Figur 5 links durch den kleinsten der konzentrischen Kreise angedeutet. Dieser entspricht der kleinsten vorgesehenen Taschenweite 13 der Taschen 6. Die konzentrischen Kreise stellen Behälter 78 unterschiedlicher Größe dar, die alternativ durch den Sternradförderer 1 gefördert werden können. Das Einstellteil 28 ist in Figur 5 in seiner maximal ausgefahrenen Position positioniert, welche durch den sich am radial äußeren Punkt 44 der Führungsnut 16 befindlichen Führungsabsatz 40 vorgegeben ist.

In der in Figur 6 gezeigten Einstellung der Taschen 6 sind diese zur Aufnahme eines Behälters 78 mit maximalem vorgesehenem Durchmesser eingestellt, wie in Figur 6 durch den größten der konzentrischen Kreise links angedeutet. Dieser entspricht der größten vorgesehenen Taschenweite 13 der Taschen 6. Das Einstellteil 28 ist in seiner maximal eingefahrenen Position. Entsprechend sind die Taschenarme 8 aus ihrer Position aus Figur 5 über ihre Schwenkachsen 24 gegengleich voneinander weg geschwenkt worden. Der Abstand 12 und mithin die Taschenweite 13 ist hier durch die Kollision der Taschenarme 8 zweier benachbarter Taschen 6 begrenzt.

Zum Wechsel der Taschengröße von der Anordnung gemäß Figur 5 in die Anordnung gemäß Figur 6 ist das Scheibensegment 14 bezogen auf die Draufsichten der Figuren 5 und 6 in Uhrzeigersinn im die Drehachse 4 um einen vorgegebenen Winkelbetrag zu verdrehen.

Wie aus dem Vergleich der Figuren 5 und 6 ersichtlich und mittels der die Behälter 78 unterschiedlicher Größe symbolisierenden konzentrischen Kreise angedeutet, kann ungeachtet der eingestellten Größe der Taschen 6 die Mittelachse 80 der Behälter 78 aller Behältergrößen im Wesentlichen auf demselben Teilkreisdurchmesser 82 positioniert sein, wenn die Behälter 78 mittels der Taschen 6 gefördert werden.

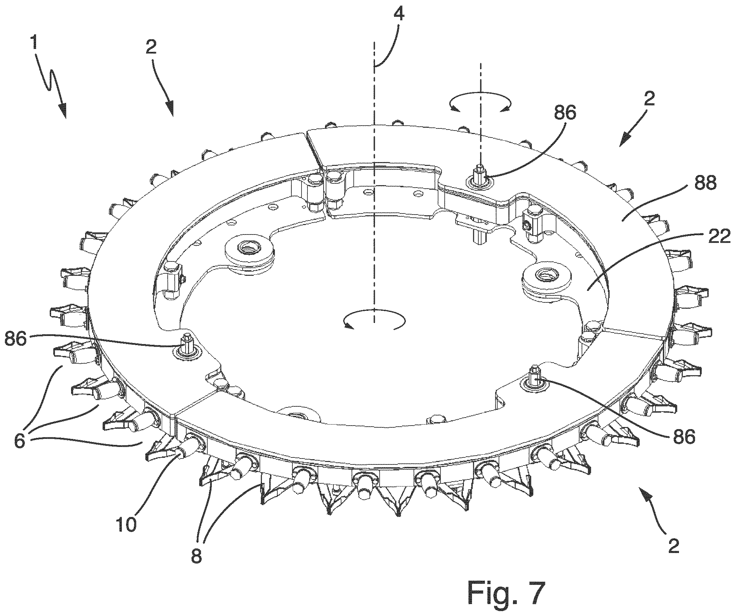

Figur 7 zeigt schematisch eine perspektivische Schnittansicht eines Sternradförderers 1 zum Fördern von Behältern 78 in einer Getränkeabfüllanlage gemäß einer weiteren optionalen Ausführungsform. Der Sternradförderer 1 entspricht im Wesentlichen jenem aus den Figuren 1 bis 3, wobei hier drei Fördersegmente 2 vorgesehen sind, die sich jeweils über einen Erstreckungswinkel von etwa 120° erstrecken und zusammen ein in Umfangsrichtung im Wesentlichen kontinuierliches Förderrad ausbilden. Die Fördersegmente 2 sind jeweils zur Umgebung hin allseitig abgedichtet und an den umfangsseitigen Stirnseiten miteinander verbunden. Zum Zwecke der Abdichtung von oben weist jedes Fördersegment 2 eine Deckplatte 88 auf.

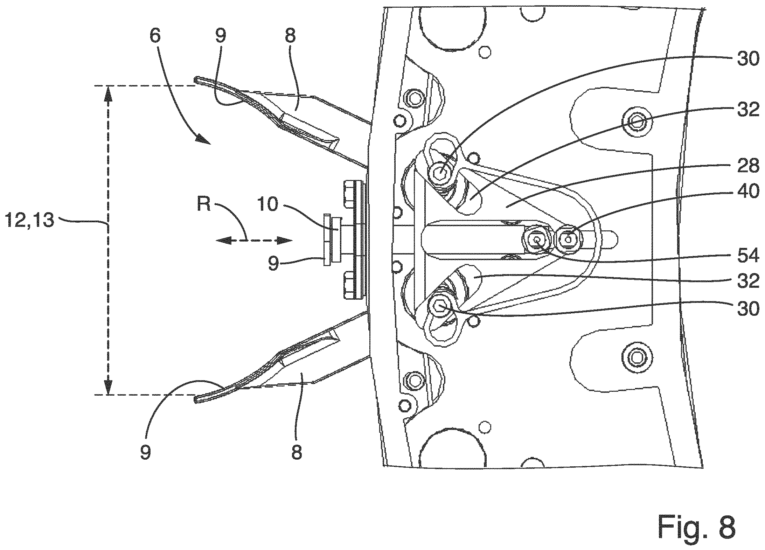

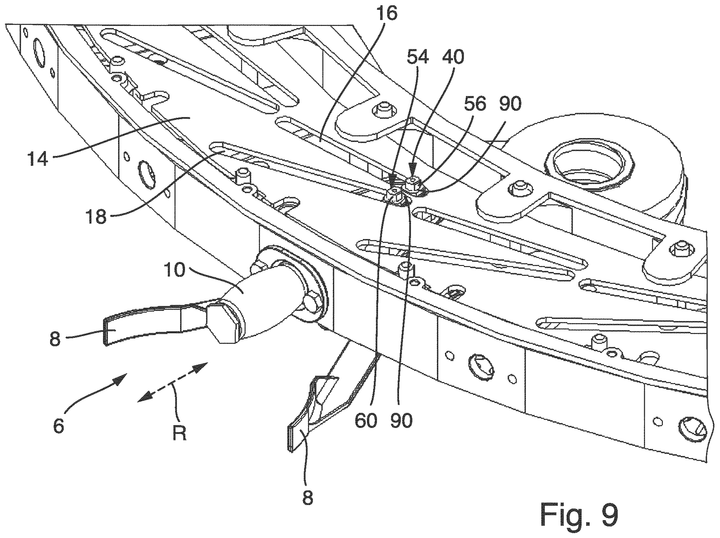

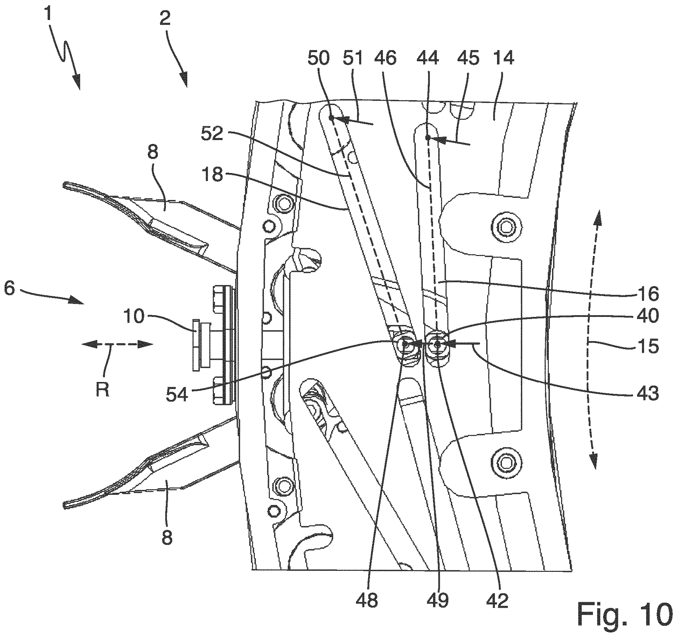

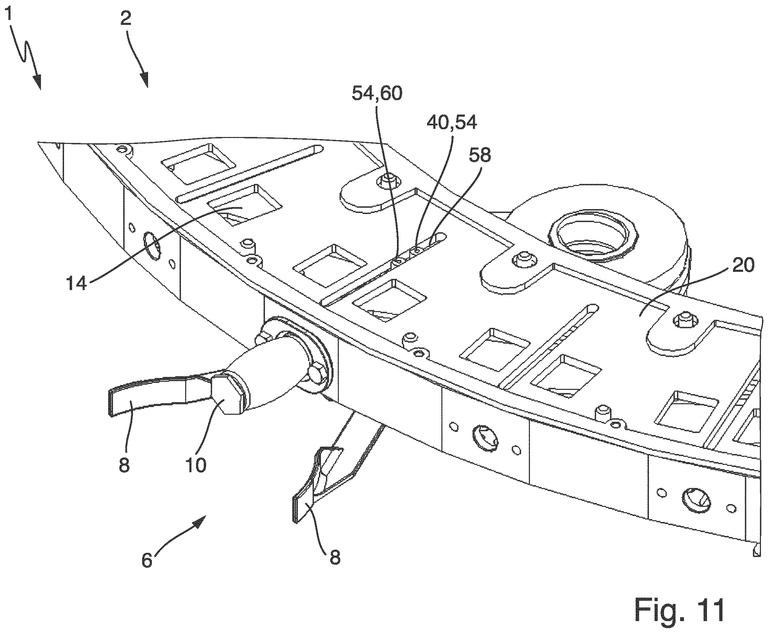

Figur 8 zeigt schematisch eine Draufsicht auf ein Detail eines Fördersegments 2 des Sternradförderers 1 aus Figur 7, wobei die Deckplatte 88, eine oberes Plattensegment 20 (siehe Figur 11) und das Scheibensegment (siehe Figuren 9 und 10) ausgeblendet sind, um den Blick auf das Einstellteil 28 und den im Fördersegmentinneren angeordneten Teil des Stempels 10 zu ermöglichen. Das Einstellteil 28 umfasst wiederum die schräg nach außen verlaufenden Langlochnuten 32, in welchen die Interaktionselemente 30 der Taschenarme 8 geführt sind.

Zu erkennen ist ferner, dass bei dieser Ausführungsform der Stempelführungsabsatz 54 radial außerhalb des Führungsabsatzes 40 des Einstellteils 28 angeordnet ist.

Mittels des Bezugszeichens 9 sind die Kontaktflächen der Tasche 6, die durch die Taschenarme 6 und den radialen Stempel 10 bereitgestellt sind, angedeutet.

Entsprechend ist die Stempelführungsnut 18 radial außerhalb der Führungsnut 16 im Scheibensegment 14 angeordnet, wie der in Figur 9 gezeigten schematischen perspektivischen Seitenansicht des in Figur 8 gezeigten Details zu entnehmen, die eine perspektivische Seitenansicht des Detailbereichs aus Figur 8 mit eingeblendetem Scheibensegment 14 zeigt. Stempelführungsabsatz 54 und Führungsabsatz 40 umfassen jeweils ein rechteckförmiges Schlittenelement 90 mit abgerundeten Ecken, welches die Führung in der Stempelführungsnut 18 bzw. der Führungsnut 16 verbessert, insbesondere ein geringes Spiel erlaubt und eine Verdrehsicherung bereitstellt.

Der Stempelführungsabsatz 54 und der Führungsabsatz 40 sind hier nicht einstückig mit, sondern jeweils als separate Einheit an dem Stempel 10 bzw. am Einstellteil 28 angebracht.

In Figur 10 ist eine schematische Draufsicht des Detailbereichs aus Figur 9 zu entnehmen. Hieraus kann wieder die lineare Trajektorie 52 der Stempelführungsnut 18 und die lineare Trajektorie 46 der Führungsnut 16 wie oben bereits zu den vorherigen Ausführungsformen eingehend beschrieben entnommen werden.

In Figur 11 ist eine schematische perspektivische Seitenansicht des Detailbereichs der Figuren 9 und 10 mit eingeblendetem oberen Plattensegment 20 zu entnehmen. Zu erkennen ist, dass bei dieser Ausführungsform der Stempel 10 und das Einstellteil 28 über eine gemeinsame radial orientierte Langlochführung 58 im oberen Plattensegment 20 geführt sind.

Der Stempelführungsabsatz 54 umfasst hierbei zudem den in der Langlochführung 28 geführten Führungsabschnitt 60, und der Führungsabsatz 40 umfasst den in der Langlochführung 28 geführten Führungsabschnitt 56.

Zurückkommend auf Figur 7 sind die mittels des Bezugszeichens 86 Betätigungseinheiten der einzelnen Fördersegmente 2 angedeutet. Diese sind zum Einstellen der Position des Scheibensegments 14 relativ zu den Einstellteilen 28 bzw. zu den oberen und unterer Plattensegmenten 20, 22 ausgebildet. Gemäß dieser Ausführungsform kann das Scheibensegment 14 einen hier nicht gezeigten gezahnten Abschnitt umfassen, vorliegend an der radial inneren Seite des Scheibensegments 14. Dieser kämmt mit einem Schneckenrad-Ritzel der Betätigungseinheit 86 (hier nicht gezeigt) im Fördersegmentinneren.

In einem Umrüstmodus, der nicht dem Förderbetrieb des Sternradförderers entspricht, sondern diesen unterbricht, kann die im Förderbetrieb fixierte Stellung der Taschenarme 8 und des Stempels 10 geändert werden, indem das im Förderbetrieb fixierte Scheibensegment 14 via der Betätigungseinheit 86 verschoben in Umfangsrichtung wird. Weisen die Taschen 6 die neue, gewünschte Größe auf, so kann das Scheibensegment 14 erneut fixiert werden, beispielsweise indem die Verzahnung zwischen Scheibensegment und Ritzes selbsthemmend ausgebildet ist und/oder die Betätigungseinheit blockiert wird, und dann wieder aus dem Umrüstmodus in einen Förderbetrieb gewechselt werden, in welchem die Taschenarme 8 und der Stempel 10jeder Tasche 6 fixiert sind.

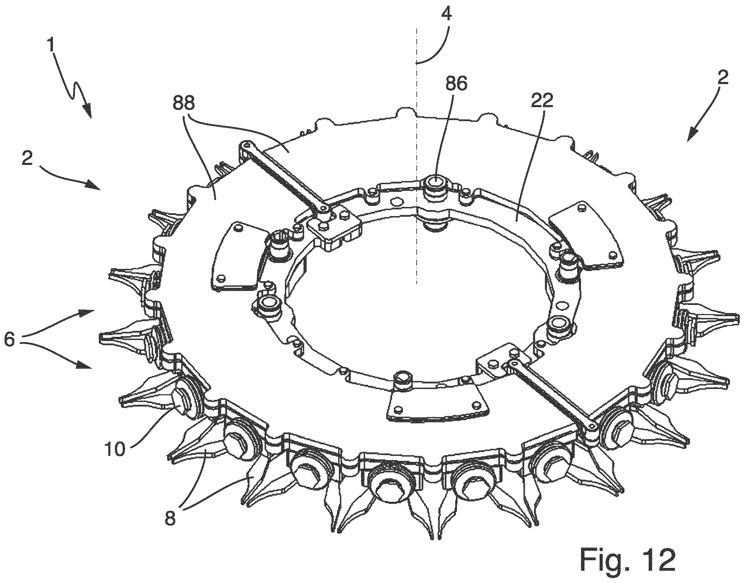

Figur 12 zeigt schematisch eine perspektivische Seitenansicht eines Sternradförderers 1 zum Fördern von Behältern 78 in einer Getränkeabfüllanlage gemäß einer weiteren optionalen Ausführungsform. Der Sternradförderer 1 entspricht im Wesentlichen jenem aus den Figuren 7 bis 11, wobei hier zwei Fördersegmente 2 vorgesehen sind, die sich jeweils über einen Erstreckungswinkel von etwa 180° erstrecken und zusammen ein in Umfangsrichtung im Wesentlichen kontinuierliches Förderrad ausbilden. Die Fördersegmente 2 sind jeweils zur Umgebung hin allseitig abgedichtet und an den umfangsseitigen Stirnseiten miteinander verbunden. Zum Zwecke der Abdichtung von oben weist jedes Fördersegment 2 eine Deckplatte 88 auf.

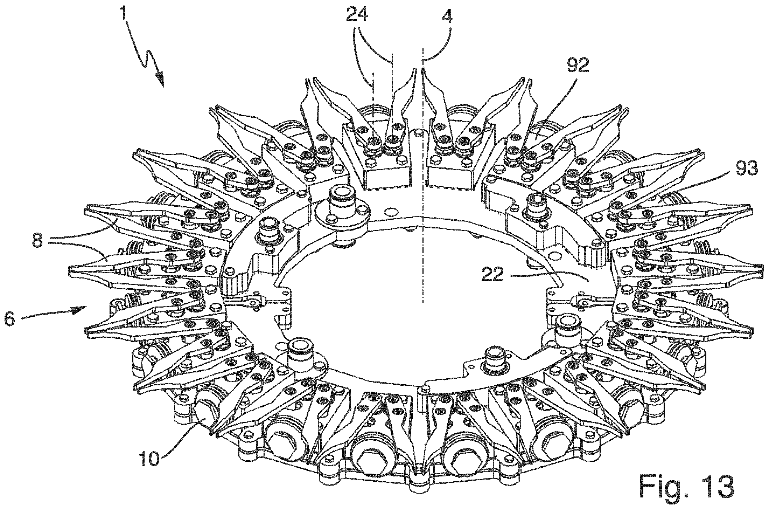

Figur 13 zeigt schematisch eine perspektivische Seitenansicht des Sternradförderers 1 aus Figur 12 von unten. Zu erkennen ist, dass von unten an das untere Plattensegment 22 Tascheneinheiten 92 angebracht sind.

Die Tascheneinheiten 92 umfassen die Taschenarme 8. Letztere sind gegenüber einem Gehäuse 93 der Tascheneinheit 92 um die Schwenkachsen 24 schwenkbar gelagert.

Die Tascheneinheiten 92 können von unten am unteren Plattensegment 22 befestigt werden, indem das Gehäuse 93 am unteren Taschensegment angeschraubt wird. Das untere Plattensegment 22 und das Gehäuse sind abgedichtet verbunden, vorliegend über eine hier nicht gezeigte Flachdichtung.

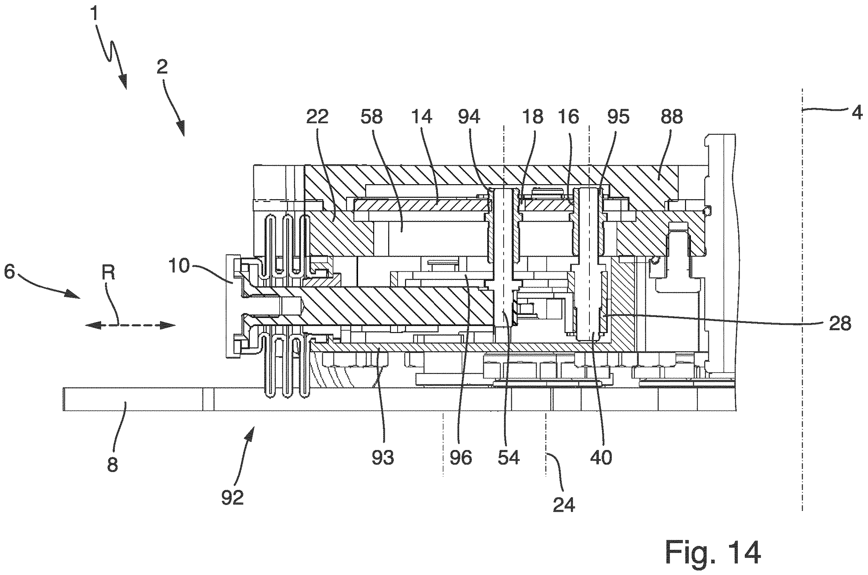

Figur 14 zeigt schematisch eine Schnittansicht in einer durch die radiale Richtung R und die Drehachse 4 definierte Ebene mittig durch eine Tasche 6. Hieraus ist zu erkennen, dass das Einstellteil 28 ebenfalls als Bestandteil der Tascheneinheit 92 im Gehäuse 93 aufgenommen ist. In Bezug auf das Gehäuse 93 erstrecken sich der Führungsabsatz 40 und der Stempelführungsabsatz 54, welche hier beide als Stifte ausgebildet sind, in Richtung der Drehachse 4 aus dem Gehäuse 93 in Richtung und durch das untere Plattensegment 22.

Bei dieser Ausführungsform umfassen die Fördersegmente kein oberes Plattensegment. Vielmehr sind der Führungsabsatz 40 und der Stempelführungsabsatz 54 in einer in radialer Richtung R orientierten Langlochführung 58 geführt.

Genauer sind zwei Hülsen 94, 95 in der Langlochführung 58 geführt. Bei einem Anbau bzw. Wechsel einer Tascheneinheit 92 am Sternradförderer 1 wird in einer erste Hülse 95 der Führungsabsatz 40 eingeschoben und in eine zweite Hülse 94 der Stempelführungsabsatz 54 eingeschoben. Die Hülsen 94, 95 sind ferner in der Führungsnut 16 bzw. der Stempelführungsnut 18 geführt. Entsprechend sind im zusammengebauten Zustand von Fördersegment 2 und Tascheneinheit 92 der Führungsabsatz 40 und der Stempelführungsabsatz 54 in der Führungsnut 16 bzw. der Stempelführungsnut 18 geführt.

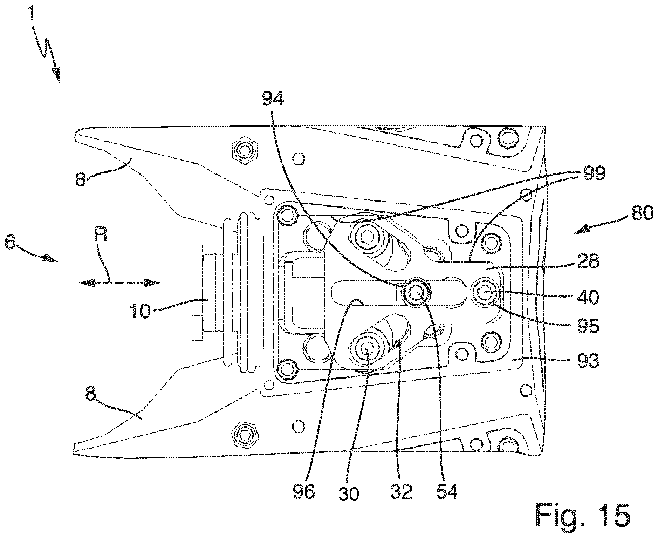

Figur 15 zeigt schematisch eine Draufsicht auf die in Figur 14 beschriebene Tascheneinheit 93. Zu erkennen ist, Einstellteil 28 beidseitig via eine Seitenführung 99 im Gehäuse 93 geführt ist, so dass eine Bewegung des Einstellteils 28 rein in radialer Richtung R möglich ist.

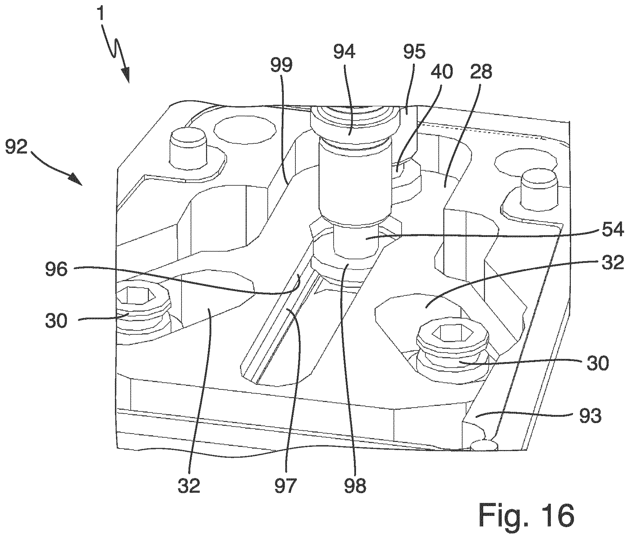

Figur 16 zeigt schematisch eine perspektivische Seitenansicht in das Innere der Tascheneinheit 92. Das Einstellteil 28 umfasst eine in radialer Richtung R orientierte weitere Nut 96, in welcher der stiftförmige Stempelführungsabsatz 54 bewegbar ist. Der Stempelführungsabsatz 54 umfasst einen Bund 98, der in sich jeweils in den sich gegenüberliegenden Seitenwänden der Nut 96 erstreckenden Bundnuten 97 geführt ist. Dadurch kann verhindert werden, dass sich der Stempel verdreht, insbesondere, wenn die Tascheneinheit 92 nicht am Fördersegment 2 angebracht ist, sondern lose vorliegt. Die erleichtert die Montage der Tascheneinheit 92 am Fördersegment 2.

Soweit anwendbar, können alle einzelnen Merkmale, die in den Ausführungsbeispielen dargestellt sind, miteinander kombiniert und/oder ausgetauscht werden, ohne den Bereich der Erfindung zu verlassen.

### Bezugszeichenliste

- 1: Sternradförderer
- 2: Fördersegment
- 4: Drehachse
- 6: Tasche
- 8: Taschenarm
- 9: Kontaktfläche
- 10: Stempel
- 12: Abstand
- 13: Taschenweite
- 14: Scheibensegment
- 16: Führungsnut
- 18: Stempelführungsnut
- 20: Oberes Plattensegment
- 22: Unteres Plattensegment
- 24: Schwenkachse
- 26: Drehlagerabschnitt
- 28: Einstellteil
- 30: Interaktionselement
- 32: Langlochnut
- 34: Trajektorie der Langlochnut
- 36: Radial innerer Punkt
- 37: Radius
- 38: Radial äußerer Punkt
- 39: Radius
- 40: Führungsabsatz
- 42: Radial innerer Punkt
- 43: Erster Radius
- 44: Radial äußerer Punkt
- 45: Zweiter Radius
- 46: Trajektorie der Führungsnut
- 48: Radial innerer Punkt
- 49: Erster Radius
- 50: Radial äußerer Punkt
- 51: Zweiter Radius
- 52: Trajektorie der Stempelführungsnut
- 54: Stempelführungsabsatz
- 56: Führungsabschnitt
- 58: Langlochführung
- 60: Führungsabschnitt
- 62: Langlochführung
- 64: Radialführung
- 66: Langlochführung
- 68: Führungsabsatz
- 70: Dichtung
- 72: Balgabschnitt
- 74: Faltenbalgabschnitt
- 78: Behälter
- 80: Mittelachse
- 82: Teilkreisdurchmesser
- 84: Drehachse
- 86: Betätigungseinheit
- 88: Deckplatte
- 90: Schlittenelement
- 92: Tascheneinheit
- 93: Gehäuse
- 94: Hülse
- 95: Hülse
- 96: Nut
- 97: Bundnut
- 98: Bund
- 99: Seitenführung
- R: Radiale Richtung

## Patentansprüche

1. Sternradförderer (1) zum Fördern von Behältern (78), bevorzugt zum Fördern von Behältern (78) in einer Getränkeabfüllanlage, umfassend ein um eine zentrale Drehachse (4) drehbares Fördersegment (2) und zumindest ein Paar von in Bezug auf die Drehachse (4) nach außen gerichteten Taschenarmen (8) zur Ausbildung einer Tasche (6) zum zumindest teilweisen Aufnehmen eines zu fördernden Behälters (78), wobei jeder Taschenarm (8) am Umfang des Fördersegments (2) angeordnet und um eine im Wesentlichen parallel zur Drehachse (4) orientiere Schwenkachse (24) schwenkbar ist,
**dadurch gekennzeichnet, dass**
die Taschenarme (8) mit einem am Fördersegment (2) angeordneten, in Bezug auf die Drehachse (4) radial verschiebbaren Einstellteil (28) derart in Eingriff stehen, dass durch Verschieben des Einstellteils (28) in radialer Richtung (R) eine Taschenweite (13) der Tasche (6) einstellbar ist.

2. Sternradförderer (1) gemäß Anspruch 1, **dadurch gekennzeichnet, dass** die zwei Taschenarme (8) des die Tasche (6) ausbildenden Paares von Taschenarmen (8) derart mit dem Einstellteil (28) in Eingriff stehen, dass durch ein Verschieben des Einstellteils (28) in radialer Richtung (R) die Taschenarme (8) zueinander gegengleich schwenkbar sind.

3. Sternradförderer (1) gemäß Anspruch 1 oder 2, **dadurch gekennzeichnet, dass** der Sternradförderer (1) derart eingerichtet ist, dass die Position der die Tasche (6) ausbildenden Taschenarme (8) des Paares von Taschenarmen (8) in einem Umrüstmodus in eine vorgegebene Position voreinstellbar sind und während eines Förderbetriebs, in welchem zu fördernde Behälter (78) gefördert werden, das Paar von Taschenarmen (8) in der voreingestellten Position fixiert ist.

4. Sternradförderer (1) gemäß einem der vorstehenden Ansprüche, **dadurch gekennzeichnet, dass** die die zwei die Tasche (6) ausbildenden Taschenarme (8) des Paares von Taschenarmen (8) derart mit dem Einstellteil (28) in Eingriff stehen, dass bei einer Verschiebung des Einstellteils (28) in einen ersten Richtungssinn, bevorzugt einen bezogen auf die Drehachse (84) nach radial außen weisenden Richtungssinn, die Taschenarme (8), bevorzugt je ein zur Ausbildung der Tasche (6) vorgesehener Taschenabschnitt der Taschenarme (8), aufeinander zu geschwenkt werden, und bei einer Verschiebung des Einstellteils (28) in einen dem ersten Richtungssinn entgegen gerichteten zweiten Richtungssinn, bevorzugt einen bezogen auf die Drehachse (4) nach radial innen weisenden Richtungssinn, die Taschenarme (8), bevorzugt deren zur Ausbildung der Tasche (6) vorgesehenen Taschenabschnitte, voneinander weg geschwenkt werden.

5. Sternradförderer (1) gemäß einem der vorstehenden Ansprüche, **dadurch gekennzeichnet, dass** die zwei die Tasche (6) ausbildenden Taschenarme (8) des Paares von Taschenarmen (8) je über ein Interaktionselement (30) mit dem Einstellteil (28) in Eingriff stehen, wobei bevorzugt das Interaktionselement (30) ein in einer Langlochnut (32) im Einstellteil (28) in Eingriff geführtes Stiftelement ist, wobei bevorzugt das Interaktionselement (30) parallel zur Schwenkachse (24) des Taschenarmes (8) orientiert ist und/oder sich parallel zur Schwenkachse (24) des Taschenarmes (8) vom Taschenarm (8) erstreckt, und/oder wobei das Interaktionselement (30) bevorzugt einstückig mit dem Taschenarm (8) ausgebildet ist.

6. Sternradförderer (1) gemäß dem vorstehenden Anspruch, **dadurch gekennzeichnet, dass** die Langlochnuten (32), bevorzugt mit ihrer jeweiligen Längserstreckung, je mit einem Winkel zur Bewegungsrichtung des Einstellteils (28) orientiert im Einstellteil (28) angeordnet sind, wobei bevorzugt die Langlochnuten (32), bevorzugt bezogen auf die Bewegungsrichtung und/oder eine zur Drehachse (4) radiale Richtung (R) achssymmetrisch im Einstellteil (28) angeordnet sind.

7. Sternradförderer (1) gemäß einem der vorstehenden Ansprüche, **dadurch gekennzeichnet, dass** das Fördersegment (2) ein relativ zum Einstellteil (28) um die Drehachse (4) drehbares Scheibensegment (14) umfasst, wobei das Einstellteil (28) derart mit dem Scheibensegment (14) in Eingriff steht, dass eine Drehung des Scheibensegments (14) um die Drehachse (4) relativ zum Einstellteil (28) eine Verschiebung des Einstellteils (28) in radialer Richtung (R) erzeugt.

8. Sternradförderer (1) gemäß dem vorstehenden Anspruch, **dadurch gekennzeichnet, dass** das Scheibensegment (14) eine Führungsnut (16) umfasst, in welcher ein am Einstellteil (28) vorstehender Führungsabsatz (40) geführt ist, wobei bevorzugt die Führungsnut (16) zumindest zwischen einem radial innen gelegenen Punkt (42) und einem radial außen gelegenen Punkt (44) eine Trajektorie (46) vorgibt, wobei die Trajektorie (46) bezogen auf die Drehachse (4) sich schräg nach außen erstreckt.

9. Sternradförderer (1) gemäß einem der vorstehenden Ansprüche, **dadurch gekennzeichnet, dass** zwischen dem Paar aus Taschenarmen (8) ein radial nach außen orientierter Stempel (10) angeordnet ist, der konfiguriert ist, zusammen mit dem Paar aus Taschenarmen (8) die Tasche (6) auszubilden, wobei der Stempel (10) insbesondere eine Tiefe der Tasche (6) in radialer Richtung (R) bezogen auf die Drehachse (4) vorgibt.

10. Sternradförderer (1) gemäß dem vorstehenden Anspruch, **dadurch gekennzeichnet, dass** der radiale Stempel (10) am Einstellteil (28) angeordnet ist, wobei bevorzugt der radiale Stempel (10) einstückig mit dem Einstellteil (28) ausgebildet ist.

11. Sternradförderer (1) gemäß Anspruch 9, **dadurch gekennzeichnet, dass** der radiale Stempel (10) relativ zum Fördersegment (2), zum Einstellteil (28) und/oder zum Paar von Taschenarmen (8) in radialer Richtung (R) bezogen auf die zur Drehachse (4) verschiebbar ist, wobei bevorzugt der Stempel (10) derart mit einem relativ zum Stempel (10) um die Drehachse (4) drehbaren Scheibensegment (14) in Eingriff steht, dass eine Drehung des Scheibensegments (14) um die Drehachse (4) relativ zum Stempel (10) eine Verschiebung des Stempels (10) in radialer Richtung (R) erzeugt, wobei bevorzugt der Stempel (10) und das Einstellteil (18) mit demselben Scheibensegment (14) in Eingriff stehen.

12. Sternradförderer (1) gemäß dem vorstehenden Anspruch, **dadurch gekennzeichnet, dass** das mit dem Stempel (10) in Eingriff stehende Scheibensegment (14) eine Stempelführungsnut (18) umfasst, in welcher ein am Stempel (10) vorstehender Stempelführungsabsatz (54) geführt ist, wobei bevorzugt die Stempelführungsnut (18) zumindest zwischen einem radial innen gelegenen Punkt (48) und einem radial außen gelegenen Punkt (50) eine Trajektorie (52) vorgibt, wobei die Trajektorie (52) der Stempelführungsnut (18) bezogen auf die Drehachse (4) sich schräg nach außen erstreckt.

13. Sternradförderer (1) gemäß einem der vorstehenden Ansprüche, **dadurch gekennzeichnet, dass** das Fördersegment (2) eine Dichtung (70) umfasst, die in radialer Richtung (R) eine Abdichtung zwischen einem radial außerhalb der Dichtung (70) vorliegenden taschenformenden Bereich der Taschenarme (8) und/oder des Stempels (10) und einem radial innerhalb der Dichtung (70) vorliegenden Fördersegmentinneren bereitstellt, wobei bevorzugt im Fördersegmentinneren das Einstellteil (28), die Interaktionselemente (30), das zumindest eine Scheibensegmente (14), der Führungsabsatz (40), der Stempelführungsabsatz (54), die Führungsnut (16) und/oder die Stempelführungsnut (18) angeordnet sind, wobei bevorzugt die Dichtung (70) eine in Umfangsrichtung des Fördersegments (2) umlaufende Dichtung (70) ist und/oder die Dichtung (70) eine Membrandichtung und/oder Balgdichtung ist, wobei bevorzugt die Dichtung (70) zumindest einen Balgbereich (72) und/oder einen Faltenbalgbereich (74) umfasst, wobei sich die Dichtung (70) bezogen auf die Drehachse (4) bevorzugt über den gesamten Umfang erstreckt.
